# FASCICULE DE BREVET EUROPEEN

(11) **EP 1 296 901 B1**
(45) Date de publication et mention de la délivrance du brevet: **28.11.2018**
(21) Numéro de dépôt: 01951768.9
(22) Date de dépôt: 04.07.2001
(51) Int. Cl.: C03C 15/00, C03C 17/00, C09K 3/18, C03C 17/32, C03C 17/02, C03C 17/30

(54) **SUBSTRAT TEXTURE TRANSPARENT ET PROCEDES POUR L'OBTENIR**
STRUKTURIERTES TRANSPARENTES SUBSTRAT UND VERFAHREN ZUR GEWINNUNG
TRANSPARENT TEXTURED SUBSTRATE AND METHODS FOR OBTAINING SAME

(30) Priorité: 06.07.2000 FR 0008842
(43) Date de publication de la demande: 02.04.2003
(73) Titulaire: SAINT-GOBAIN GLASS FRANCE, 92400 Courbevoie (FR)
(72) Inventeur: GANDON, Christophe, F-17400 Saint Jean-D'Angely (FR); MARZOLIN, Christian, F-75003 Paris (FR); ROGIER, Benoit, F-75012 Paris (FR); ROYER, Eddy, F-93250 Villemomble (FR)
(74) Mandataire: Saint-Gobain Recherche
(86) Numéro de dépôt international: PCT/FR2001/002138
(87) Numéro de publication internationale: WO 2002/002472

(56) Documents cités:
- EP-A- 0 662 683
- EP-A- 0 887 179
- WO-A-99/24523
- FR-A- 2 756 276
- FR-A- 2 792 628
- GB-A- 536 048
- US-A- 5 242 544
- PATENT ABSTRACTS OF JAPAN vol. 2000, no. 08, 6 octobre 2000 (2000-10-06) & JP 2000 135755 A (TOTO LTD), 16 mai 2000 (2000-05-16)
- PATENT ABSTRACTS OF JAPAN vol. 1995, no. 11, 26 décembre 1995 (1995-12-26) -& JP 07 206475 A (TOYOTA MOTOR CORP), 8 août 1995 (1995-08-08)

## Description

La présente invention est relative à un substrat transparent pour lequel sont recherchées les propriétés optiques les meilleures requises pour un vitrage à l'heure actuelle, qu'il s'agisse d'un vitrage pour véhicule de transport ou pour bâtiment. En plus de propriétés optiques présentées au degré le plus élevé, ce substrat est conçu pour présenter des propriétés additionnelles résidant dans la modification du comportement du substrat en mouillabilité en un comportement pouvant être qualifié de superhydrophobe/oléophobe ou super-hydrophile/oléophile, dans des propriétés anti-salissure, anti-reflet, de conduction d'électricité, anti-statique.

La propriété d'hydrophobie/oléophobie d'un substrat consiste en ce que les angles de contact entre un liquide et ce substrat sont élevés, par exemple de l'ordre de 120° pour l'eau. Le liquide a alors tendance à s'écouler aisément, sous forme de gouttes, sur le substrat, par simple gravité si le substrat est incliné ou sous l'effet de forces aérodynamiques dans le cas d'un véhicule en mouvement. Ce phénomène est l'expression d'un effet anti-pluie. Les gouttes sont, d'autre part, susceptibles d'entraîner dans leur écoulement des poussières, insectes ou salissures plus ou moins grasses de toutes natures dont la présence aurait pour conséquence un aspect inesthétique voire, le cas échéant, une altération de la vision à travers le substrat. Dans cette mesure, le substrat hydrophobe/oléophobe présente également une propriété anti-salissure.

Des agents hydrophobes/oléophobes connus sont, par exemple, des chorosilanes fluorés, des alkylsilanes fluorés tels que décrits dans la demande de brevet EP-A1-0 675 087. Ils sont appliqués de manière connue selon des modes de dépôt classiques avec ou sans chauffage.

Le document WO 00/64829 décrit des substrats comportant un relief présentant des excroissances espacées de façon régulière de un à plusieurs micromètres.

Le document US 5 242 544 décrit des substrats dont la surface présente des irrégularités dont les diamètres sont de l'ordre de quelques micromètres à quelques dizaines de micromètres.

Les demandes de brevet JP 07 206475 décrit des excroissances dont les dimensions caractéristiques (hauteurs, espacement des sommets des excroissances) sont de l'ordre de quelques dizaines à quelques centaines de micromètres.

Au contraire, la propriété d'hydrophilie/oléophilie d'un substrat se manifeste par de faibles angles de contact entre un liquide et ce substrat, par exemple compris entre 0 et 5° et de préférence très inférieurs à 5° pour l'eau sur du verre propre. Cette propriété favorise la formation de films liquides fins transparents, au détriment de celle de buée, ou de givre constitués de minuscules gouttelettes nuisant à la visibilité à travers un substrat transparent. Ces effets anti-buée et anti-givre observés sur un substrat hydrophile/oléophile sont bien connus.

De nombreux agents hydrophiles, notamment hydroxylés, tels que des poly((méth)acrylates d'hydroxyalkyle) sont utilisés à cette fin, de manière connue, pour des substrats transparents. Certains composés, dits photocatalytiques, tels que TiO₂, sont d'autre part utilisés, notamment en association avec des substrats verriers, non seulement pour leur caractère hydrophile après exposition à la lumière, mais aussi pour leur aptitude à dégrader, par un processus d'oxydation radicalaire, les salissures d'origine organique ; les propriétés hydrophile/oléophile et anti-salissure sont alors obtenues simultanément. Il est connu de déposer des revêtements à propriété photocatalytique comprenant TiO₂ à partir d'au moins un précurseur de titane, le cas échéant en solution, par pyrolyse en phase liquide, par une technique sol-gel ou encore par pyrolyse en phase vapeur.

Conformément à ce qui précède, la propriété d'hydrophobie/oléophobie s'apprécie quantitativement par la mesure de l'angle de contact formé, le plus souvent, par une goutte d'eau, sur un substrat donné. A défaut d'indication supplémentaire, cet angle de contact est mesuré pour un substrat horizontal. En réalité, comme déjà mentionné ci-dessus, c'est le comportement de gouttes de liquide en dynamique qui est visé par le fait de conférer une hydrophobie à un substrat. Ceci vaut aussi bien pour des substrats statiques sensiblement verticaux tels que les vitrages extérieurs de bâtiments, les vitrages de douche que pour les vitrages de véhicules de transport. Or, dans le cas d'une goutte de liquide sur un substrat incliné par rapport à l'horizontale, on observe deux angles de contact différents : l'angle d'avancée et l'angle de reculée, déterminés à l'avant, respectivement à l'arrière de la goutte, par rapport au sens de son déplacement. Ces angles sont des valeurs atteintes à la limite du décrochement de la goutte. On appelle hystérèse la différence entre l'angle d'avancée et l'angle de reculée. Une goutte d'eau présentant une hystérèse élevée ou un angle de reculée faible aura du mal à s'écouler sur un substrat. Ainsi, on comprend aisément qu'une hydrophobie efficace est conditionnée à la fois par un angle d'avancée élevé et une hystérèse faible. Enfin, de manière connue, la taille de la goutte influe sur les angles d'avancée et de reculée.

L'invention met à présent à disposition un substrat transparent apte à exacerber le caractère hydrophobe/oléophobe ou hydrophile/oléophile intrinsèque du matériau du substrat, susceptible d'être obtenu dans d'excellentes conditions industrielles, notamment en continu, à toutes dimensions de vitrages demandés et utilisés par le public, et présentant des propriétés optiques au meilleur niveau de celles des vitrages actuels. Ce substrat peut être, selon les cas, superhydrophobe/oléophobe (caractérisé à titre indicatif par un angle d'avancée minimum de 160° et un angle de reculée minimum de 120° pour une goutte d'eau) ou superhydrophile/oléophile (angle de contact inférieur à 5°, se rapprochant de 0° pour l'eau). Il peut être également rendu simplement hydrophobe/oléophobe ou hydrophile/oléophile de manière parfaitement contrôlée. A titre d'exemples pourront être obtenus selon l'invention des substrats hydrophobes/oléophobes ayant pour une goutte d'eau des angles d'avancée/reculée de 160°/110°, 140°/130°... (angles mesurés par croissance et décroissance de goutte à la pipette).

Lorsque le substrat est hydrophile/oléophile et photocatalytique, l'exacerbation du caractère hydrophile/oléophile va de pair avec celle du caractère antisalissure.

A cet effet, l'invention a pour objet un substrat dont une partie au moins de la surface extérieure présente la géométrie d'une nappe comportant des excroissances ayant, pour 80% au moins d'entre elles, des hauteurs comprises entre 40 et 250 nm, des diamètres moyens compris entre 1 et 500 nm, 80% au moins des distances entre deux excroissances voisines étant comprises entre 1 et 500 nm. Selon l'invention, 80% au moins des excroissances constituant sensiblement des cônes ou troncs de cônes droits d'axes perpendiculaires au plan principal du substrat et de demi-angles au sommet compris entre 0 et 60°, cette définition désignant également, dans le cas limite, des cylindres.

Bien que la transparence du substrat permette d'apprécier des avantages spécifiques liés à ses qualités optiques, le substrat de l'invention peut également n'être pas transparent.

Le minimum de 80% fixé selon l'invention n'est pas absolument impératif et dans certains cas ce minimum pourrait être inférieur à 80%, par exemple de l'ordre de 70%. Cependant un tel abaissement se fait au détriment des qualités optiques de sorte que dans la réalité ce sera la quasi-totalité des excroissances, notamment au moins 90%, de préférence au moins 95% des excroissances qui satisferont les critères requis.

L'invention permet donc d'obtenir par un procédé industriellement avantageux à maints égards comme nous le verrons dans la suite un substrat transparent superhydrophobe/oléophobe ou superhydrophile/oléophile pour toutes formes et dimensions de vitrages actuellement demandés, avec les meilleures qualités optiques requises pour des vitrages. Des substrats réalisés selon l'invention ont de plus présenté de remarquables durabilité et résistance à l'abrasion et l'érosion.

De plus, grâce à l'invention, des fonctions supplémentaires telles que anti-reflet, conduction d'électricité, anti-statique peuvent être conférées au substrat selon un procédé de fabrication tout aussi avantageux.

Selon d'autres caractéristiques de l'invention :
- 80% au moins des excroissances ont des hauteurs au moins égales à 60 nm, en particulier au moins égales à 80 nm ;
- 80% au moins des excroissances ont des hauteurs au plus égales à 190 nm, en particulier au plus égales à 170 nm ;
- 80% au moins des excroissances constituent sensiblement des cônes ou troncs de cônes droits d'axes perpendiculaires au plan principal du substrat et de demi-angles au sommet compris entre 0 et 30°, cette définition désignant également, dans le cas limite, des cylindres ;
- au moins 80% des excroissances ont des diamètres moyens de 40 à 380 nm, ce diamètre moyen pouvant par exemple être considéré comme celui du tronc de cône à mi-hauteur.

Bien entendu de nombreuses excroissances selon l'invention ont des géométries s'écartant plus ou moins de celles d'un cône, tronc de cône ou cylindre qui ne constituent que des approximations de formes fréquemment obtenues. Sont à mentionner de plus, des excroissances en colonnes perpendiculaires au plan principal du substrat, de sections régulières ou irrégulières, mais définies par deux axes ortogonaux correspondant à une plus grande, respectivement une plus petite dimensions toutes deux comprises dans le domaine de 1 à 500 nm, c'est-à-dire le domaine des diamètres moyens définis conformément à l'invention. On peut citer un rapport de ladite plus grande à ladite plus petite dimension compris avantageusement entre 1 et 4.

Font aussi partie de l'invention des substrats dont les excroissances, de sections en général différentes les unes des autres, comprennent des excroissances à section ayant une périphérie partiellement concave.

Selon des modes de réalisation préférés, la géométrie requise d'une partie au moins de la surface extérieure du substrat est donnée par une couche en un matériau contenant un ou plusieurs produits d'oxydation ou de nitruration tels que SiO₂, Si₃N₄, AlN, Al₂O₃, SnO₂, ZnOₓ avec x > 0, et/ou formée par une technique sous vide, notamment par pulvérisation cathodique assistée par champ magnétique, magnétron plasma, CVD plasma, CVD atmosphérique, pyrolyse de poudre et de liquide, par un procédé de polymérisation et/ou réticulation, par une technique du type sol-gel.

Ces composés et procédés sont en effet bien adaptés à la formation de la couche de départ dans laquelle sont formées les excroissances définies ci-dessus, en vue d'obtenir un produit de qualité optique élevée.

Cette couche donnant la géométrie voulue à la surface extérieure du substrat peut être elle-même extérieure, ou bien recouverte d'un revêtement n'en modifiant quasiment pas la géométrie de surface, tel qu'un revêtement fonctionnel, hydrophobe ou autre, monomoléculaire de quelques nanomètres d'épaisseur. Le substrat de l'invention peut être exclusivement composé de cette couche munie le cas échéant de son revêtement monomoléculaire, ou de celle-ci feuilletée avec une feuille de verre ou de matière plastique transparente sous-jacente, avec interposition éventuelle d'une couche électroconductrice. Peut être employé un verre sodocalcique, notamment un verre flotté tel qu'utilisé pour véhicules de transport, pour le bâtiment ou autre application de verre plat, ou un verre de type bouteille ou flacon, un borosilicate du type pyrex, un verre au phosphate utilisable comme prothèse ou verre optique, un verre au plomb (cristal), un aluminosilicate tel qu'une vitrocéramique, ou un matériau solide amorphe exempt de silice. Conviennent toutes matières plastiques transparentes parmi lesquelles peuvent être citées les polyvinylbutyral, polyuréthane, polycarbonate, polyméthacrylate de méthyle, résine ionomère, etc. sous réserve de leur compatibilité avec les conditions opératoires (température, pression...) des étapes successives de formation du substrat. D'autre part plusieurs feuilles de verre et/ou de matière plastique peuvent être feuilletées dans le substrat de l'invention : par exemple deux feuilles de verre reliées l'une à l'autre par une couche adhésive intercalaire de polyvinylbutyral, une feuille de verre et une feuille de polyuréthane à propriétés d'absorption d'énergie...

L'intérêt d'une interposition d'une couche électroconductrice entre la feuille de verre ou de matière plastique et la couche à excroissances est expliqué ci-dessous en relation avec l'un des modes de fabrication du substrat de l'invention. Comme exemples pour cette couche électroconductrice, on mentionne des oxydes métalliques sous-stoechiométriques et/ou dopés connus de la demande FR-2 695 117, en particulier l'oxyde d'indium dopé à l'étain (ITO), l'oxyde de zinc dopé à l'indium (ZnO:In), au fluor (ZnO:F), à l'aluminium (ZnO:Al) ou à l'étain (ZnO:Sn) et l'oxyde d'étain dopé au fluor (SnO₂:F) ou à l'antimoine (tétravalent ou pentavalent) (SnO₂:Sb). En plus de leurs propriétés de conduction de l'électricité, ces matériaux sont décrits comme présentant des propriétés de réflexion dans l'infrarouge, notamment de basse-émissivité.

A cet égard, toute association connue de couches fonctionnelles du type bas-émissive, anti-solaire, anti-reflets, de décoration (matée à l'acide, sérigraphiée, laquée, émaillée, texturée par laminage entre des rouleaux ou par d'autres procédés équivalents) avec le substrat dans un vitrage monolithique ou feuilleté est englobée dans l'invention. On cite à titre d'exemple :
- une couche réfléchissante déposée sur feuille de PET elle-même noyée dans l'adhésif intercalaire de PVB dans un pare-brise feuilleté,
- un vitrage multiple ou feuilleté comportant une couche mince de contrôle solaire (par exemple du type commercialisé par la société SAINT-GOBAIN GLASS sous l'une des marques STARELIO, COOL-LITE) en face 2 et un substrat à excroissances de l'invention en face intérieure du vitrage multiple, en contact avec l'atmosphère de l'enceinte protégée,
- ou encore un double vitrage dont la feuille de verre extérieure est une glace claire vendue sous la marque PLANILUX par la société SAINT-GOBAIN GLASS, qui a une face extérieure avec excroissances selon l'invention et une face intérieure, en regard de la lame d'air, munie d'une couche mince de SnO₂:F déposée par CVD (produit commercialisé sous les marques EKO et EKO PLUS par la société SAINT-GOBAIN GLASS) ou d'une couche à l'argent déposée par pulvérisation cathodique sous vide (produit commercialisé par la société SAINT-GOBAIN GLASS sous la marque PLANITHERM), chacune de ces couches présentant une forte réflexion dans le domaine du rayonnement infrarouge de grande longueur d'onde (faible émissivité) ce qui diminue fortement les déperditions thermiques et confère au double vitrage une isolation thermique renforcée pour une transmission lumineuse élevée,
- couche texturée (face 1)/Planilux/couche antisolaire : COOL-LITE, STARELIO (face 2),
- couche texturée (face l)/Planilux/air de gaz rares/couche bas-émissive SnO₂:F (EKO) ou à l'argent (PLANITHERM) (face 3) / Planilux/ couche texturée / Planilux/ couches réfléchissantes (miroir : le substrat est toujours transparent, c'est la couche qui est réfléchissante),
- texturation/verre/sérigraphie (SERALIT, marque déposée par la société SAINT-GOBAIN GLASS).

Le substrat de l'invention est susceptible d'atteindre une qualité optique remarquable. Il présente ainsi avantageusement une transmission lumineuse au moins égale à 80%, en particulier au moins égale à 85%, tout particulièrement au moins égale à 90% et un voile au plus égal à 5%, en particulier au plus égal à 2% et tout particulièrement au plus égal à 1%.

Selon une des variantes principales de l'invention, le substrat est hydrophobe/oléophobe. De manière connue la création d'irrégularités sur une surface en accroît le caractère hydrophobe ou hydrophile. Comme indiqué ci-dessus, un choix approprié de géométrie des excroissances permet de contrôler ce caractère hydrophobe. On transforme par exemple une surface plane caractérisée par des angles d'avancée/reculée de 100°/80° en une surface à excroissances d'angles 160°/ 120°.

Dans ce cas, le substrat est constitué, à sa surface extérieure, au moins en partie :
a) de composés obtenus notamment par une technique sous vide, par évaporation, pulvérisation, sol-gel, CVD ou similaires;
b) de silicones ; et/ou
c) de composés répondant aux formules : 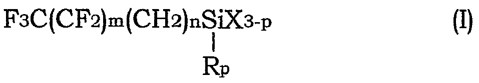 et

   R_{p'}SiX_{4-p'} (II)

   dans lesquelles :
   - m = 0 à 15 ;
   - n = 1 à 5 ;
   - p = 0, 1 ou 2 ;
   - R est un groupe alkyle linéaire ou ramifié ou un atome d'hydrogène ;
   - X est un groupe hydrolysable tel qu'un groupe halogéno, alkoxy, acétoxy, acyloxy, amino, NCO ;
   - p' = 0, 1, 2 ou 3.

Les techniques d'obtention susmentionnées sont avantageuses en ce qu'elles permettent d'incorporer les composés hydrophobes dans une couche qui ne serait pas hydrophobe sans cette incorporation. On peut donc à cette fin utiliser un précurseur supplémentaire en vue d'obtenir un composite organique/inorganique. Il est cependant tout aussi possible de ne mettre en oeuvre qu'un seul précurseur apte à conférer la propriété d'hydrophobie.

On cite à titre d'exemple la mise en oeuvre d'un procédé de type CVD plasma, à partir de l'un au moins des précurseurs choisis parmi :
- un silane tel que tétraméthylsilane, hexaméthyldisilane, un alkoxysilane, par exemple un alkoxytrialkylsilane, dans lequel le groupe alkyle est un groupe méthyle, éthyle, propyle, isopropyle, le groupe méthyle étant préféré ;
- un silane fluoré, notamment un perfluoroalkylalkyltrialkoxysilane ou un perfluoroalkylalkyltrihalogénosilane ;
- un siloxane tel qu'hexaméthyldisiloxane ;
- un silazane tel qu'hexaméthyldisilazane .

En employant par exemple l'hexaméthyldisiloxane on obtient une couche à surface plane, c'est-à-dire avant formation des excroissances, d'angle de contact statique pour une goutte d'eau de 105°.

Cette surface extérieure du substrat, constituée au moins en partie d'un ou plusieurs des composés précités, consiste soit en la couche donnant la géométrie requise à excroissances décrite précédemment, soit en un revêtement appliqué sur cette couche, suffisamment fin pour ne pas en modifier sensiblement la géométrie. Comme évoqué ci-dessus, il peut s'agir d'un film monomoléculaire greffé.

Selon une autre variante, le substrat est hydrophile/oléophile par le fait qu'il comprend un agent approprié. Comme agent hydrophile/oléophile on peut citer, en tant que produit final ou précurseur, les polyacide (méth)acrylique tel quel ou au moins partiellement salifié au sodium, potassium, césium..., tensioactifs non ioniques, esters de cellulose tels qu'hydroxypropylcellulose, dérivés de chitosan et de chitine, polyméthacrylates, poly(alcools vinyliques) et poly(acétate de vinyle), polypyrrole, polyaniline, polyacrylamide, poly(N,N-diméthylacrylamide), poly(N-isopropylacrylamide), polyéthylèneglycol, polypropylèneglycol, polyoxyéthylène à fonctions hydroxy ou méthoxy terminales, chlorhydrate de polyallylamine, polysaccharide, dextrans (ramifiés), pullulan (polysaccharide linéaire), polyacide styrènecarboxylique et sel de celui-ci, polyacide styrènesulfonique, polystyrènesulfonate de sodium, polyvinylbutyral, polyiodure de 2-vinyl-N-méthyl-pyridinium, polyiodure de 4-vinyl-N-méthyl-pyridinium, poly(2-vinyl-pyridine), polybromure de 2-vinyl-pyridinium, polyvinylpyrrolidone, copolymères obtenus à partir de monomères de départ de différents polymères précités, et notamment copolymères séquencés, certains composés du titane tels que tétraisopropyle de titane ou tétraisobutyle de titane, éventuellement stabilisé, par exemple par acétylacétonate, tétrachlorure de titane...

De même que les agents hydrophobes/oléophobes, les agents hydrophiles/oléophiles peuvent être notamment incorporés dans la couche constituant les excroissances elle-même, ou être appliqués sur cette couche en un film fin.

Les propriétés d'hydrophobie et d'hydrophilie se contrariant l'une l'autre, le substrat de l'invention ne comprend en général qu'un ou plusieurs agents hydrophobes/oléophobes ou un ou plusieurs agents hydrophiles/oléophiles. Cependant l'invention autorise la coexistence des deux types d'agents, notamment dans une variante dans laquelle la surface extérieure du substrat comprend des excroissances hydrophobes et un niveau bas entre les excroissances qui est hydrophile (on comprendra ci-dessous comment le procédé de fabrication du substrat de l'invention permet la réalisation aisée d'un tel produit). Dans cette variante, la majeure partie d'un liquide entrant en contact avec le substrat s'écoule sur les excroissances hydrophobes, et seule une infime partie de ce liquide entre en contact avec le niveau bas hydrophile et y forme un film uniforme transparent.

Avantageusement, le substrat de l'invention présente des propriétés anti-salissure. Celles-ci peuvent résulter partiellement, comme il a été vu ci-dessus, des propriétés (super-)hydrophobe/oléophobe ou (super-) hydrophile/oléophile. Ces propriétés peuvent également être liées directement à la nature de certains constituants du substrat. Ainsi comme déjà mentionné, parmi les agents hydrophiles/oléophiles, certains composés du titane, par exemple TiO₂, ont l'aptitude de décomposer par voie photocatalytique les résidus organiques.

L'invention apporte un progrès conséquent dans le contrôle de l'évacuation des liquides sur le substrat, de la suppression de gouttelettes, buée, givre formés à partir du liquide résiduel, c'est-à-dire non évacué, de la dégradation de salissure contenue dans ce liquide résiduel, de sorte que le substrat peut être maintenu propre en l'absence de tout nettoyage.

Selon un mode de réalisation préféré, le substrat de l'invention présente des propriétés anti-reflet. De manière classique, un substrat anti-reflet est obtenu en associant une première couche mince extérieure, c'est-à-dire en contact avec l'atmosphère, d'indice de réfraction relativement faible, avec une seconde couche mince immédiatement sous la première et d'indice de réfraction plus élevé puis éventuellement avec d'autres couches d'indices alternativement faibles et forts. Conformément à la présente invention la confection d'excroissances permet de contrôler la fraction solide par rapport à la fraction d'air. Ainsi dans l'épaisseur correspondante du substrat, l'indice de réfraction est une fonction de l'indice du matériau et de l'indice de l'air, égal à 1 c'est-à-dire minimal. Cet indice est inférieur à celui qu'aurait une couche pleine du même matériau et peut être abaissé en tendant vers 1, par le fait que l'on diminue la fraction solide, de manière contrôlée .

Un effet anti-reflet résulte donc du fait que la couche externe comporte une fraction extérieure correspondant aux excroissances et une fraction intérieure pleine. Selon une autre variante, la couche externe ne comporte pas une telle fraction intérieure pleine. Alternativement ou de façon complémentaire, les propriétés anti-reflet peuvent résulter d'un traitement sous la forme d'un empilement de couches minces interférentielles, consistant en général en une alternance de couches à base de matériau diélectrique à forts et faibles indices de réfraction ou sous la forme d'une couche présentant un gradient d'indice de réfraction dans son épaisseur, comme décrit dans le document EP-1 013 622. Un tel revêtement déposé sur un substrat transparent a pour fonction d'en diminuer la réflexion lumineuse, donc d'en augmenter la transmission lumineuse. Il est souligné que de tels empilements ou couches sont susceptibles d'être formés notamment par des techniques sous vide du type CVD plasma, CVD non assistée par un plasma, pulvérisation cathodique notamment assistée par un champ magnétique, pulvérisation réactive, c'est-à-dire des techniques qui peuvent facilement être intégrées dans un procédé en continu avec celles de formation des excroissances, développées dans la suite.

En face extérieure d'un pare-brise automobile, l'effet anti-reflet a pour conséquence l'amélioration du confort visuel du conducteur et des passagers.

Conformément à un mode de réalisation intéressant, le substrat est conducteur d'électricité. Tel peut être le cas d'une couche constitutive du substrat, en contact ou non avec l'atmosphère ambiante, ou de la totalité du substrat. Des exemples de matériaux utilisés sont les oxydes métalliques sous-stoechiométriques et/ou dopés cités précédemment. L'aptitude du substrat à conduire l'électricité vise ici la fonction antistatique, c'est-à-dire la capacité de dissiper les charges électrostatiques et à en éviter l'accumulation localement, ainsi que la constitution de films chauffants, notamment pour le désembuage et le dégivrage de vitrages. D'autres matériaux conducteurs d'électricité utilisables sont un matériau comprenant par exemple SiH₄ ou CH₄ comme précurseur afin de former des liaisons métalliques du type Si-Si ou C-C ou des sels métalliques tels qu'acétylacétonate de cuivre. L'intérêt d'éviter les accumulations locales de charges électrostatiques apparaît dans des applications telles que pare-brise d'avion, dans lequel il importe au contraire d'évacuer ces charges par conduction. Des accumulations de charges constitueraient en effet une source de craquèlement et destruction d'éventuelles couches fonctionnelles empilées, ainsi que de la structure même du substrat, notamment lorsqu'il est feuilleté.

Un autre objet de l'invention réside dans un procédé de gravure d'une couche, d'un verre, de silice (quartz) ou d'un substrat polymère, par un plasma réactif à travers un masque en un matériau et de dimensions adaptés, de manière à y former les excroissances telles que définies ci-dessus.

On s'est en effet aperçu de manière surprenante, et sans que les raisons en soient encore bien connues, que la gravure n'avait quasiment pas lieu en l'absence de masque, dans le cas où c'est un verre que l'on entend graver.

En plus des avantages procurés par ce procédé qui résident dans les qualités des produits obtenus telles que superhydrophobie, superhydrophilie, propriétés optiques dans le cas d'un substrat transparent, durabilité, sur de grandes surfaces, ce procédé semble actuellement prometteur car il peut être réalisé par des techniques notamment sous vide qui permettent d'effectuer des traitements du substrat en vue notamment de l'équiper de fonctions toujours plus nombreuses requises pour les vitrages, en continu et au moyen d'un seul appareillage. Un mode de gravure adéquat est la gravure ionique réactive.

La couche à graver (ce qui, dans la suite, désigne aussi bien la couche, le verre, la silice ou le substrat polymère à graver) peut être transparente ou non ; dans ce dernier cas elle peut dans certains cas être transformée ensuite en couche transparente (par exemple oxydation de Ti ou Al en TiO₂ ou Al₂O₃ transparent).

Selon des caractéristiques avantageuses du procédé :
- le masque est en un matériau conducteur d'électricité, tel qu'un métal, notamment un métal noble du type Au, Ag, Pt, Pd, un alliage métallique, un oxyde conducteur tel qu'obtenu par dopage, notamment SnO₂:F, SnO₂:In et similaires, une céramique ou un polymère ;
- le masque est utilisé en contact avec la couche à graver ; mentionnons à cet égard un mode de formation du masque du type jet d'encre, entre autres nombreuses possibilités ;
- au contraire, le masque est utilisé sans contact avec la couche à graver ; le masque peut par exemple consister en une grille métallique positionnée parallèlement et à faible distance de cette dernière ;
- ledit masque est utilisé à l'état supporté par une feuille, notamment en matière plastique, ce qui est particulièrement pratique, le masque étant notamment obtenu à partir d'un produit en rouleaux ; dans ce mode de réalisation, de bons résultats peuvent être obtenus, que le masque soit situé sur la face de ladite feuille orientée vers la couche à graver, ou sur son autre face.

Pour obtenir le substrat de l'invention par ce procédé, la gravure est anisotrope et orientée suivant la normale au substrat. Pour ce faire, cinq variantes sont préconisées.

Selon la première, la couche à graver est stratifiée à une couche conductrice d'électricité sous-jacente, qui est polarisée avec un générateur de radiofréquences pendant la gravure. La nature de la couche conductrice d'électricité a été précisée ci-dessus.

Selon la seconde variante, le substrat est placé sur un support conducteur d'électricité relié à un générateur de radiofréquences pendant la gravure.

Conformément aux trois autres variantes :
- la couche à graver est elle-même conductrice d'électricité ; il s'agit par exemple de SnO₂:F ou d'une couche métallique telle que Ti ou Al qui sera éventuellement, après gravure, oxydée en TiO₂ ou Al₂O₃ transparent ;
- la couche à graver est feuilletée à une feuille de verre conducteur d'électricité ;
- la couche à graver est feuilletée à une feuille de verre munie sur sa face opposée d'une couche conductrice d'électricité telle que SnO₂:F.

Selon d'autres caractéristiques du procédé :
- on utilise l'un ou plusieurs des gaz plasmagènes CF₄, C₃F₂, SF₆, C₂F₄, CHF₃ pour effectuer la gravure;
- le masque est constitué de nodules comprenant l'un au moins des éléments Ag, Au, Pd, Pt, Cu, Al, Zn, Sn, Sb, Ti, Zr, W, Mb, Ta, Ir. Une couche de l'un ou plusieurs de ces éléments est aisément soumise à un démouillage pour obtenir les nodules dans d'excellentes conditions de reproductibilité, aux dimensions requises comparables à inférieures aux longueurs d'onde de la lumière visible afin de minimiser le flou, sur des surfaces de relativement grandes tailles (telles que supérieures à 1 m²) et avec une vitesse de mise au point rapide ;
- le procédé comprend une étape consistant à éliminer ou transformer en composés transparents la fraction dudit masque constitué de nodules subsistant après avoir effectué la gravure. Il est précisé que les nodules métalliques pouvant également être attaqués pendant la gravure, il n'en reste pas toujours à la fin de celle-ci. Un procédé d'élimination peut consister, dans le cas de nodules en Ag par exemple, à plonger les substrats gravés dans une solution aqueuse acide, par exemple de HNO₃. On peut également envisager une élimination mécanique, notamment à l'aide d'une brosse. Un exemple de transformation en composés transparents est l'oxydation d'Al en Al₂O₃ par passage d'une flamme sur le substrat gravé ;
- le procédé comprend une étape consistant à former un revêtement sur le substrat après avoir effectué la gravure puis, le cas échéant, éliminé ou transformé la fraction dudit masque subsistant après avoir effectué la gravure. Un exemple en est le greffage sous vide d'une couche monomoléculaire d'un agent hydrophobe ou hydrophile.

Selon un second procédé de fabrication du substrat transparent décrit précédemment, on forme des nodules aux dimensions et géométrie requises pour lesdites excroissances, on les rend transparents si nécessaire et on forme un revêtement tel que le greffage sous vide d'une couche monomoléculaire fonctionnelle.

L'invention a d'autre part pour objet un vitrage comprenant le substrat décrit précédemment, ce vitrage étant destiné à un véhicule de transport terrestre, maritime ou aérien, en particulier à une automobile, au bâtiment (fenêtre, porte, élément de mobilier sanitaire ou autre tel que cabine de douche, table, tablette...), à un élément décoratif d'intérieur tel qu'un aquarium ou d'extérieur, au mobilier urbain (abribus...), à l'électroménager (porte de four, tablette de réfrigérateur...). En dehors des éléments de cadre ou de châssis un tel vitrage peut être essentiellement constitué d'un substrat selon l'invention, ou comporter un ou plusieurs tels substrats associés à une ou plusieurs feuilles de verre ou de matière plastique ou structures transparentes feuilletées en un vitrage multiple dans lequel tous les constituants sont séparés deux à deux par une lame d'air ou similaire.

D'autres objets et applications avantageux de l'invention sont :
- un écran lenticulaire ou un substrat à microprismes obtenus selon l'un des procédés décrits ci-dessus comportant des irrégularités de surface de dimensions dans le plan principal dans la gamme de 1 µm à 1 mm ; citons des rangées régulières et jointives en excroissance, de 8 à 14 µm de hauteur, de 300 à 400 µm de pas (distance crête à crête entre deux rangées voisines), formées en vue d'obtenir un système d'affichage en trois dimensions ;
- un substrat en verre gravé pour lampe ou afficheur obtenu selon l'un des procédés décrits ci-dessus comportant des irrégularités de surface de dimensions dans le plan principal dans la gamme de 0,1 à 10 µm ;
- l'application d'un substrat selon l'invention présentant des cavités de diamètres compris entre 0,1 et 500 nm comme microréacteurs chimiques ou biochimiques.

L'invention est maintenant décrite à la lumière d'un exemple de réalisation.

### EXEMPLE 1

Une feuille de verre clair flotté de 0,7 mm d'épaisseur vendue sous l'appellation commerciale « Planilux » par la Société SAINT-GOBAIN GLASS France a été munie d'un revêtement d'oxyde d'indium dopé à l'étain (ITO) de 110 nm d'épaisseur selon une technique quelconque de dépôt connue à cet effet, puis d'une couche de SiO₂ de 100 nm d'épaisseur par toute technique appropriée (magnétron plasma, pyrolyse, CVD plasma, sol-gel...).

Une couche d'Ag de 15 nm d'épaisseur est déposée sous vide par pulvérisation magnétron. Il est ensuite procédé au démouillage de cette couche d'Ag par traitement thermique à 300°C sous un vide de 9 mTorr pendant 30 min. Des nodules d'Ag sont ainsi formés sur la couche de SiO₂.

On soumet le substrat ainsi obtenu à une gravure ionique réactive dans les conditions opératoires suivantes. La cathode est alimentée en courant continu, la sous-couche conductrice d'ITO étant polarisée en étant reliée à un générateur de radiofréquences réglé sur 13,56 MHz. On utilise SF₆ comme gaz plasmagène et une pression de 75 mTorr. La puissance est de 0,106 W/cm² et la durée du traitement de 250 s.

Une immersion pendant une nuit dans une solution aqueuse 1 molaire de HNO₃ à température ambiante a pour effet d'éliminer la fraction des nodules d'Ag qui n'avait pas été attaquée à l'étape précédente de gravure.

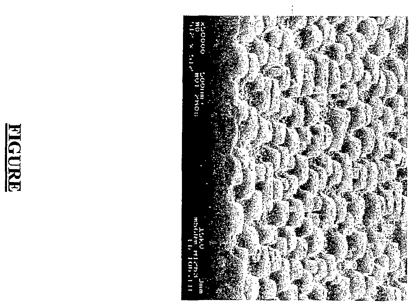

Le substrat obtenu vu sous un angle de 15° avec un grossissement de 50000 au microscope électronique à balayage est représenté sur la figure unique en annexe. Il est observé une formation d'excroissances dont 80% au moins ont des hauteurs comprises entre 70 et 200 nm, des diamètres moyens compris entre 50 et 400 nm, 80% au moins des distances entre deux excroissances voisines étant comprises entre 1 et 500 nm. Ces excroissances peuvent être définies comme des troncs de cône droits d'axes perpendiculaires au plan principal du substrat et de demi-angles au sommet faibles, inférieurs à 20°.

On greffe sous vide en phase vapeur sur ce substrat une monocouche de perfluorooctyléthyltrichlorosilane C₁₀F₁₇H₄SiCl₃.

Les angles d'avancée et de reculée mesurés par croissance, respectivement décroissance d'une goutte d'eau au moyen d'une pipette sont de 165°, respectivement 122°, correspondant à un comportement superhydrophobe.

On mesure de plus une transmission lumineuse de 92,8% et un voile inférieur à 4 % au moyen d'un appareil Hazegard XL 211.

### EXEMPLE 2

Une feuille de verre différant de celle de l'exemple précédant en ce qu'elle ne comporte ni revêtement ITO, ni couche de SiO₂, est soumise au même démouillage d'argent que précédemment, puis aux opérations ultérieures décrites dans l'exemple précédent, en étant simplement posée sur un support conducteur d'électricité relié au même générateur de radiofréquences, toutes autres conditions étant égales par ailleurs.

Les excroissances cylindriques (axes perpendiculaires au plan de la feuille) formées sont caractérisées dans leur quasi-totalité par une hauteur d'environ 100 nm, un diamètre de 80 à 100 nm, et une distance entre les axes de deux cylindres voisins comprise entre 130 et 150 nm.

La vitesse de gravure mesurée perpendiculairement à la surface du substrat est de 5 à 8 nm/min ; en l'absence du masque constitué par les nodules d'argent, cette vitesse est nulle.

Ainsi l'invention permet-elle de conjuguer sur un substrat de grande taille une fonctionnalité de tension superficielle, une qualité optique remarquables et une possibilité d'apporter des fonctions supplémentaires, dans d'excellentes conditions de mise en oeuvre industrielle, notamment dans de nombreux cas en effectuant les différents traitements en continu dans un seul appareillage.

## Revendications

1. Substrat transparent susceptible d'être obtenu par gravure d'une couche, d'un verre, de silice (quartz) ou d'un substrat polymère, par un plasma réactif à travers un masque en un matériau et de dimensions adaptés, de manière à y former des excroissances, ledit substrat **étant caractérisé en ce qu'**une partie au moins de sa surface extérieure présente la géométrie d'une nappe comportant des excroissances ayant, pour 80% au moins d'entre elles, des hauteurs comprises entre 40 et 250 nm, des diamètres moyens compris entre 1 et 500 nm, 80% au moins des distances entre deux excroissances voisines étant comprises entre 1 et 500 nm, 80% au moins des excroissances constituant sensiblement des cônes ou troncs de cônes droits d'axes perpendiculaires au plan principal du substrat et de demi-angles au sommet compris entre 0 et 60°.

2. Substrat selon la revendication 1, **caractérisé en ce que** 80% au moins des excroissances ont des hauteurs au moins égales à 60 nm, en particulier au moins égales à 80 nm.

3. Substrat selon l'une des revendications précédentes, **caractérisé en ce que** 80% au moins des excroissances ont des hauteurs au plus égales à 190 nm, en particulier au plus égales à 170 nm.

4. Substrat selon l'une des revendications précédentes, **caractérisé en ce qu'**au moins 80% des excroissances constituent sensiblement des cônes ou troncs de cônes droits d'axes perpendiculaires au plan principal du substrat et de demi-angles au sommet compris entre 0 et 30°.

5. Substrat selon l'une des revendications précédentes, **caractérisé en ce qu'**au moins 80% des excroissances ont des diamètres moyens de 40 à 380 nm.

6. Substrat selon l'une des revendications précédentes, dont la géométrie requise d'une partie au moins de la surface extérieure est donnée par une couche en un matériau contenant un ou plusieurs produits d'oxydation et/ou de nitruration, et/ou formée par une technique sous vide, notamment par pulvérisation cathodique assistée par champ magnétique, magnétron plasma, CVD plasma, CVD atmosphérique, pyrolyse de poudre et de liquide, par un procédé de polymérisation et/ou réticulation, par une technique du type sol-gel.

7. Substrat selon l'une des revendications précédentes, **caractérisé en ce qu'**il présente une transmission lumineuse au moins égale à 80%, en particulier au moins égale à 85%, tout particulièrement au moins égale à 90% et un voile au plus égal à 5%, en particulier au plus égal à 2% et tout particulièrement au plus égal à 1%.

8. Substrat selon l'une des revendications précédentes, **caractérisé en ce qu'**il est hydrophobe/oléophobe.

9. Substrat selon la revendication 8, **caractérisé en ce qu'**à sa surface extérieure, il est constitué au moins en partie :
a) de composés obtenus notamment par une technique sous vide, par évaporation, pulvérisation, sol-gel, CVD ou similaires ;
b) de silicones ; et/ou
c) de composés répondant aux formules : 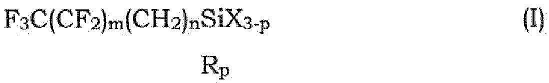 et
R_{p'}SiX_{4-p'} (II)
dans lesquelles :
- m = 0 à 15 ;
- n = 1 à 5 ;
- p = 0, 1 ou 2 ;
- R est un groupe alkyle linéaire ou ramifié ou un atome d'hydrogène ;
- X est un groupe hydrolysable tel qu'un groupe halogéno, alkoxy, acétoxy, acyloxy, amino, NCO ;
- p' =0, 1, 2 ou 3.

10. Substrat selon l'une des revendications précédentes, **caractérisé en ce qu'il** est hydrophile/oléophile.

11. Substrat selon l'une des revendications précédentes, **caractérisé en ce qu'**il présente des propriétés anti-salissure.

12. Substrat selon l'une des revendications précédentes **caractérisé en ce qu'**il présente des propriétés anti-reflet.

13. Substrat selon l'une des revendications précédentes, **caractérisé en ce qu'**il est conducteur d'électricité.

14. Procédé d'obtention d'un substrat selon l'une des revendications 1 à 13, comprenant la gravure d'une couche, d'un verre, de silice (quartz) ou d'un substrat polymère, par un plasma réactif à travers un masque en un matériau et de dimensions adaptés.

15. Procédé selon la revendication 14, **caractérisé en ce que** ledit masque est en un matériau conducteur d'électricité, tel qu'un métal, notamment un métal noble du type Au, Ag, Pt, Pd, un alliage métallique, un oxyde conducteur tel qu'obtenu par dopage, notamment SnO₂:F, SnO₂:In et similaires, une céramique ou un polymère.

16. Procédé selon la revendication 14, **caractérisé en ce que** ledit masque est utilisé en contact avec la couche à graver.

17. Procédé selon la revendication 14, **caractérisé en ce que** ledit masque est utilisé sans contact avec la couche à graver.

18. Procédé selon la revendication 14, **caractérisé en ce que** ledit masque est utilisé à l'état supporté par une feuille, notamment en matière plastique.

19. Procédé selon la revendication 14, **caractérisé en ce que** la couche à graver est stratifiée à une couche conductrice d'électricité sous-jacente, qui est polarisée avec un générateur de radiofréquences pendant la gravure.

20. Procédé selon la revendication 14, **caractérisé en ce que** ledit substrat est placé sur un support conducteur d'électricité relié à un générateur de radiofréquences pendant la gravure

21. Procédé selon la revendication 14, **caractérisé en ce que** la couche à graver est elle-même conductrice d'électricité.

22. Procédé selon la revendication 14, **caractérisé en ce que** la couche à graver est feuilletée à une feuille de verre conducteur d'électricité .

23. Procédé selon la revendication 14, **caractérisé en ce que** la couche à graver est feuilletée à une feuille de verre munie sur sa face opposée d'une couche conductrice d'électricité.

24. Procédé selon la revendication 14, **caractérisé en ce que** sont utilisés l'un ou plusieurs des gaz plasmagènes CF₄, C₃F₂, SF₆, C₂F₄, CHF₃.

25. Procédé selon la revendication 14, **caractérisé en ce que** le masque est constitué de nodules comprenant l'un au moins des éléments Ag, Au, Pd, Pt, Cu, Al, Zn, Sn, Sb, Ti, Zr, W, Mb, Ta, Ir.

26. Procédé selon la revendication 14, **caractérisé en ce qu'**il comprend une étape consistant à éliminer ou transformer en composés transparents la fraction dudit masque subsistant après avoir effectué la gravure.

27. Procédé selon la revendication 14, **caractérisé en ce qu'**il comprend une étape consistant à former un revêtement sur le substrat après avoir effectué la gravure puis, le cas échéant, éliminé ou transformé la fraction dudit masque subsistant après avoir effectué la gravure.

28. Vitrage comprenant un substrat selon l'une des revendications 1 à 13, pour véhicule de transport terrestre, maritime, aérien, pour le bâtiment, pour un élément décoratif d'intérieur ou d'extérieur, pour le mobilier urbain ou pour l'électroménager.

## Patentansprüche

1. Transparentes Substrat, das durch Gravieren einer Schicht, eines Glases, von Siliziumdioxid (Quarz) oder eines Polymersubstrats mit einem reaktiven Plasma durch eine Maske aus einem geeigneten Material mit geeigneten Abmessungen derart gewinnbar ist, dass dort Vorsprünge gebildet werden, wobei das Substrat **dadurch gekennzeichnet ist, dass** mindestens ein Teil seiner Außenfläche die Geometrie einer Lage aufweist, die Vorsprünge aufweist, welche für mindestens 80 % von ihnen Höhen zwischen 40 und 250 nm inklusive, mittlere Durchmesser zwischen 1 und 500 nm inklusive haben, wobei mindestens 80 % der Abstände zwischen zwei benachbarten Vorsprüngen zwischen 1 und 500 nm inklusive betragen, wobei mindestens 80 % der Vorsprünge etwa gerade Konen oder Konenstümpfe mit senkrechten Achsen zur Hauptebene des Substrats und halben Winkeln an der Spitze zwischen 0 und 60° inklusive bilden.

2. Substrat nach Anspruch 1, **dadurch gekennzeichnet, dass** mindestens 80 % der Vorsprünge Höhen haben, die mindestens gleich 60 nm, insbesondere mindestens gleich 80 nm betragen.

3. Substrat nach einem der vorangehenden Ansprüche, **dadurch gekennzeichnet, dass** mindestens 80 % der Vorsprünge Höhen haben, die höchstens gleich 190 nm, insbesondere höchstens gleich 170 nm betragen.

4. Substrat nach einem der vorangehenden Ansprüche, **dadurch gekennzeichnet, dass** mindestens 80 % der Vorsprünge etwa gerade Konen oder Konenstümpfe mit senkrechten Achsen zur Hauptebene des Substrats und halben Winkeln an der Spitze zwischen 0 und 30° inklusive bilden

5. Substrat nach einem der vorangehenden Ansprüche, **dadurch gekennzeichnet, dass** mindestens 80 % der Vorsprünge mittlere Durchmesser von 40 bis 380 nm haben.

6. Substrat nach einem der vorangehenden Ansprüche, dessen erforderliche Geometrie mindestens eines Teils der Außenfläche von einer Schicht aus einem Material gegeben ist, das ein oder mehrere Oxidations- und/oder Nitrierungsprodukte enthält und/oder von einer Vakuumtechnik gebildet ist, vor allem durch Sputtern, unterstützt durch Magnetfeld, Magnetronplasma, CVD-Plasma, atmosphärisches CVD, Pyrolyse von Pulver und von Flüssigkeit, durch ein Polymerisations- und/oder Vernetzungsverfahren, durch eine Technik vom Typ Sol-Gel.

7. Substrat nach einem der vorangehenden Ansprüche, **dadurch gekennzeichnet, dass** es eine Lichtdurchlässigkeit von mindestens gleich 80 %, insbesondere mindestens gleich 85 %, im Besonderen von mindestens gleich 90 % und einen Schleier von höchstens gleich 5 %, insbesondere von höchstens gleich 2 % und im Besonderen von höchstens gleich 1 % aufweist.

8. Substrat nach einem der vorangehenden Ansprüche, **dadurch gekennzeichnet, dass** es hydrophob/oleophob ist.

9. Substrat nach Anspruch 8, **dadurch gekennzeichnet, dass** es auf seiner Außenfläche mindestens teilweise gebildet ist:
a) von Verbindungen, die vor allem durch eine Vakuumtechnik, durch Verdampfen, Sprühen, Sol-Gel, CVD oder Ähnliches erhalten sind;
b) von Silikonen; und/oder
c) von Verbindungen, die den Formeln entsprechen: 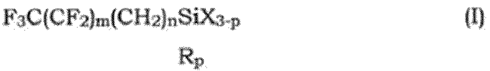 und
R_{p'}SiX_{4-p'} (II)
wobei:
- m = 0 bis 15;
- n = 1 bis 5;
- p = 0, 1 oder 2;
- R eine lineare oder verzweigte Alkylgruppe oder ein Wasserstoffatom ist;
- X eine hydrolysierbare Gruppe wie eine Halogen-, Alkoxy-, Acetoxy-, Acyloxy-, Amino-, NCO-Gruppe ist;
- p' = 0, 1, 2 oder 3.

10. Substrat nach einem der vorangehenden Ansprüche, **dadurch gekennzeichnet, dass** es hydrophil/oleophil ist.

11. Substrat nach einem der vorangehenden Ansprüche, **dadurch gekennzeichnet, dass** es schmutzabweisende Eigenschaften aufweist.

12. Substrat nach einem der vorangehenden Ansprüche, **dadurch gekennzeichnet, dass** es Antireflex-Eigenschaften aufweist.

13. Substrat nach einem der vorangehenden Ansprüche, **dadurch gekennzeichnet, dass** es elektrisch leitend ist.

14. Verfahren zur Gewinnung eines Substrats nach einem der Ansprüche 1 bis 13, umfassend das Gravieren einer Schicht, eines Glases, von Siliziumdioxid (Quarz) oder eines Polymersubstrats mit einem reaktiven Plasma durch eine Maske aus einem geeigneten Material mit geeigneten Abmessungen.

15. Verfahren nach Anspruch 14, **dadurch gekennzeichnet, dass** die Maske aus einem elektrisch leitenden Material wie einem Metall, vor allem einem Edelmetall vom Typ Au, Ag, Pt, Pd, einer Metalllegierung, einem leitenden Oxid, wie erhalten durch Dotierung, vor allem SnO₂:F, SnO₂:In und Vergleichbarem, einer Keramik oder einem Polymer ist.

16. Verfahren nach Anspruch 14, **dadurch gekennzeichnet, dass** die Maske im Kontakt mit der Gravurschicht verwendet wird.

17. Verfahren nach Anspruch 14, **dadurch gekennzeichnet, dass** die Maske ohne Kontakt mit der Gravurschicht verwendet wird.

18. Verfahren nach Anspruch 14, **dadurch gekennzeichnet, dass** die Maske im von einer Folie, vor allem aus Kunststoff, getragenen Zustand verwendet wird.

19. Verfahren nach Anspruch 14, **dadurch gekennzeichnet, dass** die Gravurschicht auf eine darunterliegende elektrisch leitende Schicht geschichtet ist, die während der Gravur mit einem Funkfrequenzerzeuger polarisiert wird.

20. Verfahren nach Anspruch 14, **dadurch gekennzeichnet, dass** das Substrat auf eine elektrisch leitende Unterlage platziert wird, die während der Gravur mit einem Funkfrequenzerzeuger verbunden ist.

21. Verfahren nach Anspruch 14, **dadurch gekennzeichnet, dass** die Gravurschicht selbst elektrisch leitend ist.

22. Verfahren nach Anspruch 14, **dadurch gekennzeichnet, dass** die Gravurschicht auf eine elektrisch leitende Glasscheibe laminiert ist.

23. Verfahren nach Anspruch 14, **dadurch gekennzeichnet, dass** die Gravurschicht auf eine Glasscheibe laminiert ist, die auf ihrer gegenüberliegenden Seite mit einer elektrisch leitenden Schicht ausgestattet ist.

24. Verfahren nach Anspruch 14, **dadurch gekennzeichnet, dass** eines oder mehrere der plasmabildenden Gase CF₄, C₃F₂, SF₆, C₂F₄, CHF₃ verwendet werden.

25. Verfahren nach Anspruch 14, **dadurch gekennzeichnet, dass** die Maske aus Knoten gebildet ist, die mindestens eines der Elemente Ag, Au, Pd, Pt, Cu, Al, Zn, Sn, Sb, Ti, Zr, W, Mb, Ta, Ir umfassen.

26. Verfahren nach Anspruch 14, **dadurch gekennzeichnet, dass** es einen Schritt umfasst, der darin besteht, die Fraktion der nach Durchführung der Gravur verbliebenen Maske zu entfernen oder in transparente Verbindungen umzuwandeln.

27. Verfahren nach Anspruch 14, **dadurch gekennzeichnet, dass** es einen Schritt umfasst, der darin besteht, auf dem Substrat nach Durchführung der Gravur, dann nach gegebenenfalls Entfernung oder Umwandlung der nach Durchführung der Gravur verbliebenen Fraktion der Maske, eine Beschichtung zu bilden.

28. Verglasung, umfassend ein Substrat nach einem der Ansprüche 1 bis 13 für Land-, See-, Luftransportfahrzeug, für das Bauwesen, für ein Innen- oder Außendekorationsobjekt, für die Stadtmöblierung oder für elektrische Haushaltsgeräte.

## Claims

1. A substrate which can be obtained by etching of a layer, of a glass, of silica (quartz) or of a polymeric substrate by a reactive plasma, via a mask of appropriate material and dimensions so as to form protuberances, said substrate being **characterized in that** at least part of the outer surface has the geometry of a sheet provided with protuberances, at least 80% of which have heights of between 40 and 250 nm as well as mean diameters of between 1 and 500 nm, at least 80% of the distances between two neighboring protuberances ranging between 1 and 500 nm, at least 80% of the protuberances are substantially cones or right frustums of cones with axes perpendicular to the principal plane of the substrate and with half-angles at the apex ranging between 0 and 60°.

2. A substrate according to claim 1, **characterized in that** at least 80% of the protuberances have heights at least equal to 60 nm, in particular at least equal to 80 nm.

3. A substrate according to one of the preceding claims, **characterized in that** at least 80% of the protuberances have heights at most equal to 190 nm, in particular at most equal to 170 nm.

4. A substrate according to one of the preceding claims, **characterized in that** at least 80% of the protuberances are substantially cones or right frustums of cones with axes perpendicular to the principal plane of the substrate and with half-angles at the apex ranging between 0 and 30°.

5. A substrate according to one of the preceding claims, **characterized in that** at least 80% of the protuberances have mean diameters of 40 to 380 nm.

6. A substrate according to one of the preceding claims, wherein the required geometry of at least part of the outer surface is provided by a layer of a material containing one or more oxidation or nitridation products, and/or is formed by a vacuum technique, especially by magnetic-field-assisted cathodic sputtering, plasma magnetron, plasma CVD, atmospheric CVD, powder and liquid pyrolysis, by a polymerization and/or cross-linking process, or by a technique of the sol-gel type.

7. A substrate according to one of the preceding claims, **characterized in that** it has light transmission equal to at least 80%, in particular equal to at least 85%, very particularly equal to at least 90%, and haze equal to at most 5%, in particular equal to at most 2% and very particularly equal to at most 1%.

8. A substrate according to one of the preceding claims, **characterized in that** it is hydrophobic/oleophobic.

9. A substrate according to claim 8, **characterized in that** it is composed, at its outer surface, at least partly of:
a) compounds obtained in particular by a vacuum technique, by evaporation, sputtering, sol-gel, CVD or similar technique;
b) silicones; and/or
c) compounds of the formulas: 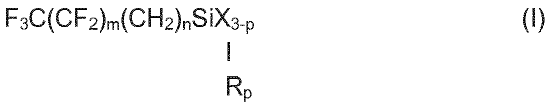 and
R_{p'}SiX_{4-p'} (II)
in which:
- m=0 to 15;
- n=1 to 5;
- p=0, 1 or 2;
- R is a straight-chain or branched alkyl group or a hydrogen atom;
- X is a hydrolysable group such as a halo, alkoxy, acetoxy, acyloxy, amino or NCO group;
- p' =0, 1, 2 or 3.

10. A substrate according to one of the preceding claims, **characterized in that** it is hydrophilic/oleophilic.

11. A substrate according to one of the preceding claims, **characterized in that** it has dirt-repelling properties.

12. A substrate according to one of the preceding claims, **characterized in that** it has antireflective properties.

13. A substrate according to one of the preceding claims, **characterized in that** it is electrically conductive.

14. A process for the obtaining of a substrate as claimed in claims 1 to 13, comprising the etching of a layer, of a glass, of silica (quartz) or of a polymeric substrate by a reactive plasma, via a mask of appropriate material and dimensions.

15. A process according to claim 14, **characterized in that** the said mask is composed of an electrically conductive material such as a metal, especially a noble metal such as Au, Ag, Pt or Pd, a metal alloy, a conductive oxide such as obtained by doping, especially SnO2:F, SnO2:In and similar oxides, a ceramic or a polymer.

16. A process according to claim 14, **characterized in that** the said mask is used in contact with the layer to be etched.

17. A process according to claim 14, **characterized in that** the said mask is used without contact with the layer to be etched.

18. A process according to claim 14, **characterized in that** the said mask is used in a condition in which it is supported by a sheet, especially of plastic.

19. A process according to claim 14, **characterized in that** the layer to be etched is laminated with an underlying electrically conductive layer, which is polarized with a radiofrequency generator during etching.

20. A process according to claim 14, **characterized in that** the substrate is placed on an electrically conductive support connected to a radiofrequency generator during etching.

21. A process according to claim 14, **characterized in that** the layer to be etched is itself electrically conductive.

22. A process according to claim 14, **characterized in that** the layer to be etched is laminated with a sheet of electrically conductive glass.

23. A process according to claim 14, **characterized in that** the layer to be etched is laminated with a sheet of glass provided on its opposite face with an electrically conductive layer.

24. A process according to claim 14, **characterized in that** one or more plasmagenic gases such as CF4, C3F2, SF6, C2F4 or CHF3 is or are used.

25. A process according to claim 14, **characterized in that** the mask is composed of nodules containing at least one of the elements Ag, Au, Pd, Pt, Cu, Al, Zn, Sn, Sb, Ti, Zr, W, Mb, Ta, Ir.

26. A process according to claim 14, **characterized in that** it includes a step in which the fraction of the said mask remaining after completion of etching is eliminated or transformed to transparent compounds.

27. A process according to claim 14, **characterized in that** it includes a step in which a coating is formed on the substrate after completion of etching, after which, as the case may be, the fraction of the said mask remaining after completion of etching is eliminated or transformed.

28. A process for manufacture of a substrate containing protuberances according to one of claims 1 to 13, **characterized in that** nodules are formed in the dimensions and geometry required for the said protuberances, they are made transparent if necessary, and a coating is formed if necessary by, for example, vacuum grafting of a functional monomolecular layer.
